# EUROPEAN PATENT SPECIFICATION

(11) **EP 3 216 337 B1**
(45) Date of publication and mention of the grant of the patent: **26.12.2018**
(21) Application number: 16425024.3
(22) Date of filing: 11.03.2016
(51) Int. Cl.: A01D 34/86, A01D 34/43

(54) **EQUIPMENT FOR SHREDDING PLANT MATERIAL**
AUSRÜSTUNG ZUR ZERKLEINERUNG VON PFLANZENMATERIAL
ÉQUIPEMENT POUR BROYER UNE MATIÈRE VÉGÉTALE

(43) Date of publication of application: 13.09.2017
(73) Proprietor: Nobili S.p.A., 40062 Molinella (Bologna) (IT)
(72) Inventor: Rossi, Mario, 40062 MOLINELLA (BOLOGNA) (IT)
(74) Representative: Fanzini, Valeriano

(56) References cited:
- EP-A1- 2 617 278
- DE-B1- 2 023 254
- DE-U1- 20 122 186
- DE-U1- 20 211 861
- FR-A1- 2 915 655
- GB-A- 1 212 188

## Description

The invention relates to an equipment for shredding plant material, in particular grassy material and/or shrubs in general.

More specifically, the equipment is designed to be supported, preferably in a condition suspended above the ground, and moved by a respective vehicle, in particular a tractor.

Equipment for shredding plant material is known in the prior art which is designed to be supported in a condition suspended above the ground and moved or transported by a respective tractor and in particular which is movable relative to the vehicle, in at least one working position or position for shredding the plant material, where it extends transversely to the direction of drive or forward movement of the vehicle, and in a respective rest position, in particular suitable for road transport.

The prior art equipment comprise means for shredding the plant material including a respective rotatable rotor, to which are articulated respective blades, or flails, for shredding the plant material and which is housed in a corresponding protective containment body, which is designed to define, in use, with the underlying ground a respective working chamber.

The prior art equipment also comprise means, or frame, for coupling to the transport vehicle and means for rotatable or articulated supporting of the shredding means relative to the coupling means, in particular comprising a respective pin for rotating the shredding means with respect to the means for coupling to the vehicle.

One problem seen in this prior art shredding equipment relates to the particular difficulty of transforming a respective equipment from equipment designed to be positioned in front of the transport vehicle or tractor to equipment which is designed to be positioned to the rear of the tractor, or vice versa.

In effect, in cases of this type, it is necessary transport the equipment to a suitable workshop and perform time-consuming operations for disassembling the shredding means from the corresponding frame for coupling to the tractor and reassembling the shredding means to the frame for coupling to the tractor in the new operating position, with the need, above all, to use corresponding complex working apparatuses, such as lifting winches or the like.

Moreover, the need is equally felt in the trade for equipment which is easily made and which has a limited construction cost.

EP 2 617 278 A1 discloses an equipment (1) which has connection units forming a deformable parallelogram, and including juxtaposed links (16) whose ends are mounted swivelling around vertical rotation axis on a tool portion (2) and an attachment portion (3).

GB 1 212 188 A discloses a mower comprising an arm at an end of a frame or casing swingable at least about a generally vertical axis for mowing round obstacles, the arm being outwardly urged by a spring 80 and inwardly urged by hydraulic means.

DE 20 23 254 B1 discloses an hand-held small mower with a motor-driven chassis and arranged on this cutter bar, wherein the cutter bar is connected to the chassis, via a support arm, rotatable about a vertical axis on the chassis and connected to the knife bar and pivoting the cutter bar about a horizontal axis.

This invention therefore proposes a new solution as an alternative to the solutions known up to now and, more specifically, proposes to overcome one or more of the above mentioned drawbacks or problems and/or to meet one or more of the needs felt in the trade or inferable from the above.

The invention is defined by the claims.

In this way, it is possible to change of arrangement of the equipment directly in the operating area, without the need to transport the equipment to a special workshop.

These and other innovative aspects of the invention, or specific advantageous features, are set out in the appended claims and its technical features and advantages are apparent from the detailed description which follows of a preferred, advantageous embodiment of it, which must be considered purely as a non-limiting example the description being made with reference to the accompanying drawings, in which:
- Figure 1A is a perspective view of a preferred embodiment of the equipment according to the invention, in an operating position wherein it is designed to be located in front of the vehicle which transports it;
- Figure 1B is a top plan view of the preferred embodiment of the equipment in the operating position of Figure 1A;
- Figure 1C is a cross section of the shredding means of the preferred embodiment of equipment according to this invention;
- Figure 1D is a top plan view of the preferred embodiment of equipment according to this invention in a second transversal operating position;
- Figure 1E is a cross section of the shredding means of the preferred embodiment of equipment according to this invention in a further working position, in particular in which is designed to work on an inclined surface;
- Figure 1F is a perspective view of the preferred embodiment of the equipment according to the invention, in a rest and transporting position, in particular on the road;
- Figure 2A is a perspective view of the preferred embodiment of the equipment according to the invention, configured such that it may be located in a rear position of the vehicle for transporting or movement;
- Figure 2B is a top plan view of the preferred embodiment of the equipment according to the invention, in the configuration designed for being located in a rear position of the vehicle for transporting or movement;
- Figure 3 shows the various steps for changing the configuration of the preferred embodiment of the equipment according to the invention, between a position suitable for supporting at the front of the transporting or moving vehicle and a configuration designed to be located to the rear of the transporting or moving vehicle.

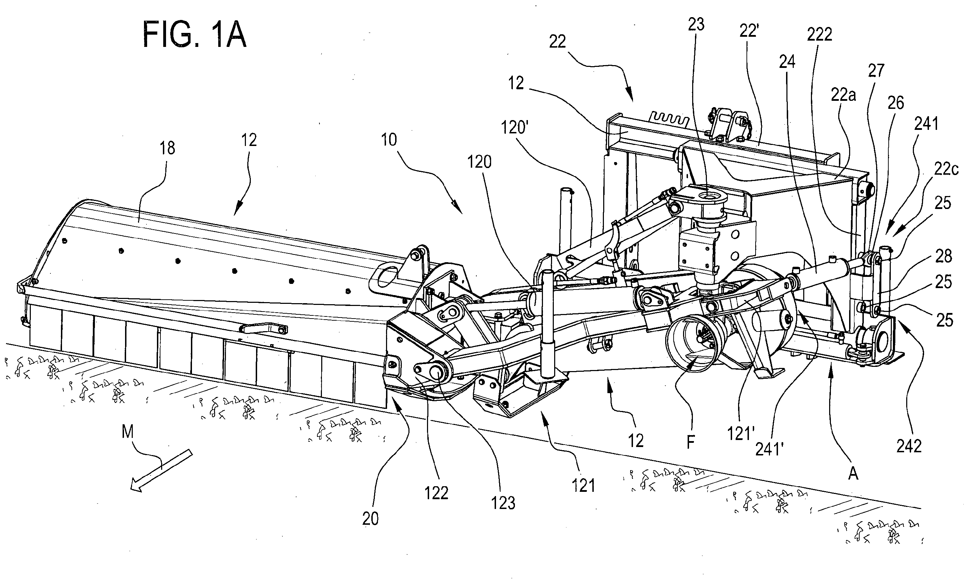

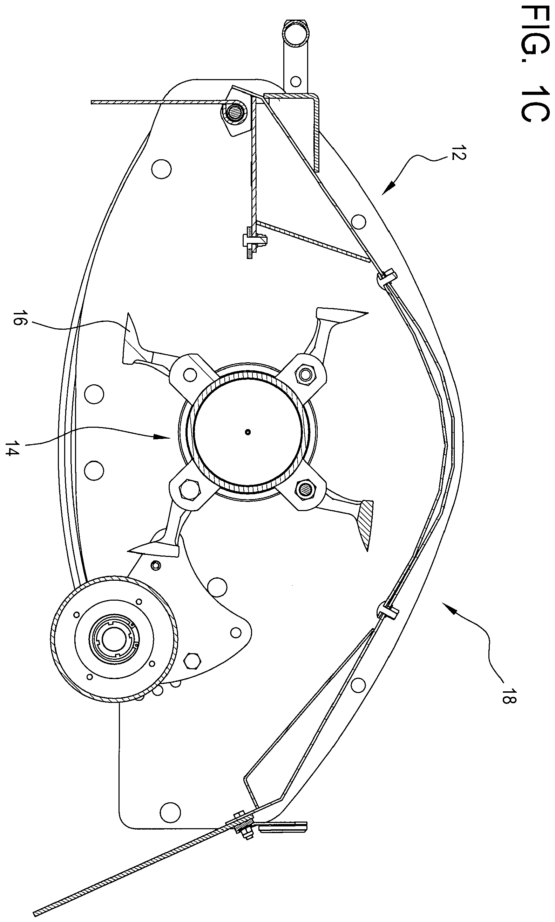

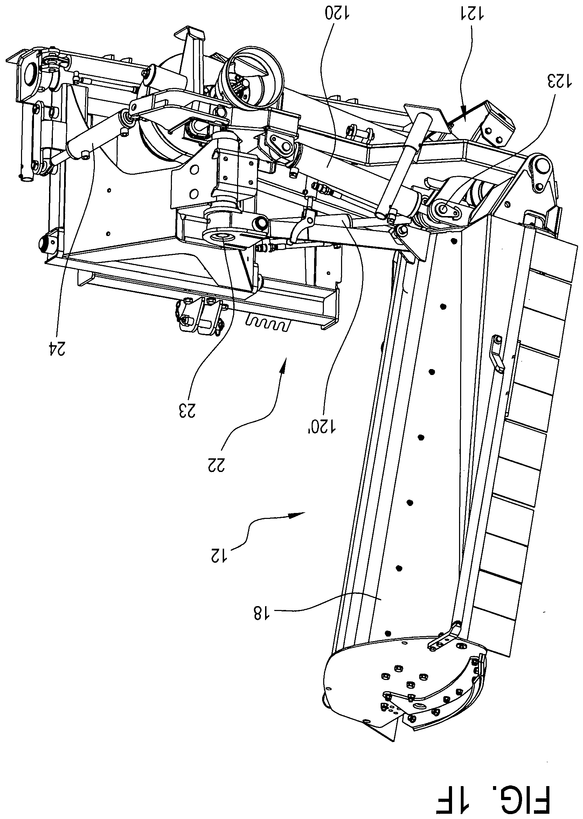

The accompanying drawings show a preferred embodiment 10 of equipment for shredding plant material, in particular grassy material and/or shrubs in general, which is designed to be supported, preferably in a condition suspended above the ground, and moved by a respective vehicle, in particular a tractor (not illustrated in the accompanying drawings), in particular in at least one working position or position for shredding the plant material (as shown in more detail in Figure 1A), wherein it preferably extends transversely to the direction of drive or forward movement M of the vehicle, and in a the respective rest position (illustrated in Figure 1F), in particular suitable for road transport.

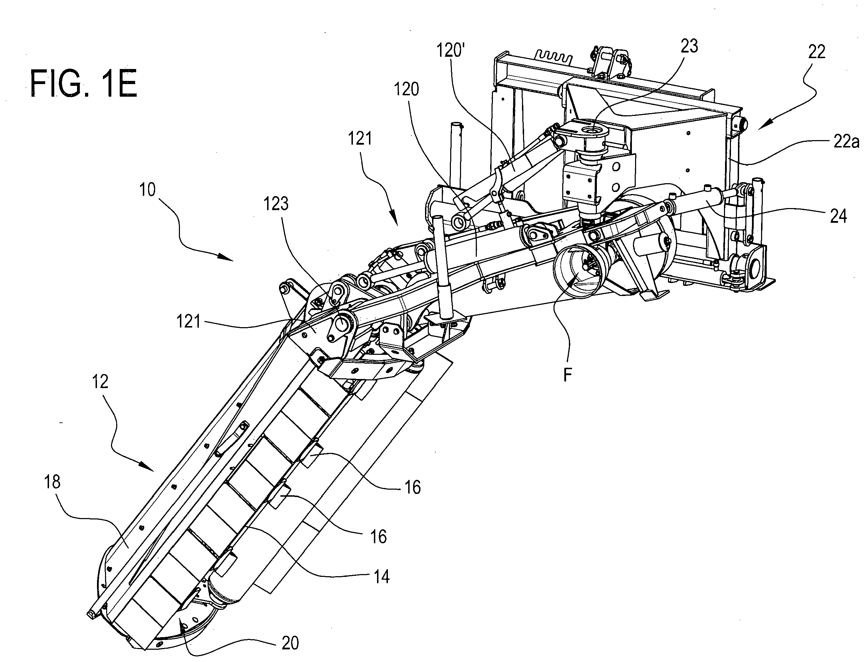

Further, as may be inferred from Figure 1E, the equipment 10 is also designed to process the slope of an inclined surface.

As may be inferred from the corresponding drawings, the equipment 10 is designed to receive the drive for moving the means for shredding the plant material from the vehicle through a corresponding power take-off F.

As may be inferred from the drawings, the equipment 10 comprises means 12 for shredding the plant material, in particular comprising a respective rotatable rotor 14, to which are articulated respective blades, or flails, 16 for shredding the plant material and which is preferably, as shown, housed in a corresponding protective containment body 18, which is designed to define, in use, with the underlying ground a respective working chamber 20. As illustrated, in the normal working position, shown in Figure 1A, the motor has the respective axis of rotation which extends horizontally or substantially horizontally, whilst in the inclined position of Figure 1E it can easily reach an inclination of, for example, 25° relative to the horizontal.

The equipment also comprises means, or frame, 22 for coupling to the transport vehicle and means for rotatable or articulated supporting of the shredding means relative to the coupling means, in particular comprising a respective pin 23 for rotating the shredding means 12 with respect to the means 22 for coupling to the vehicle.

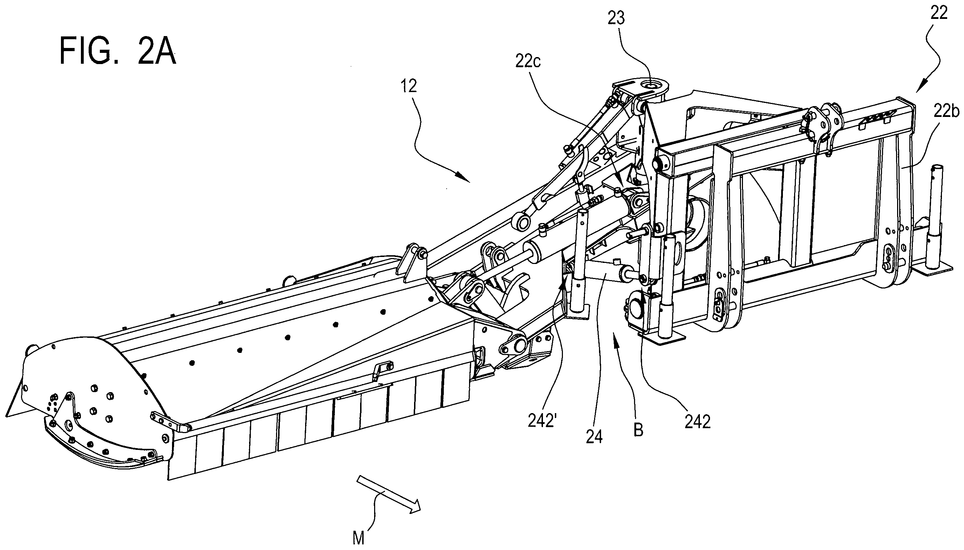

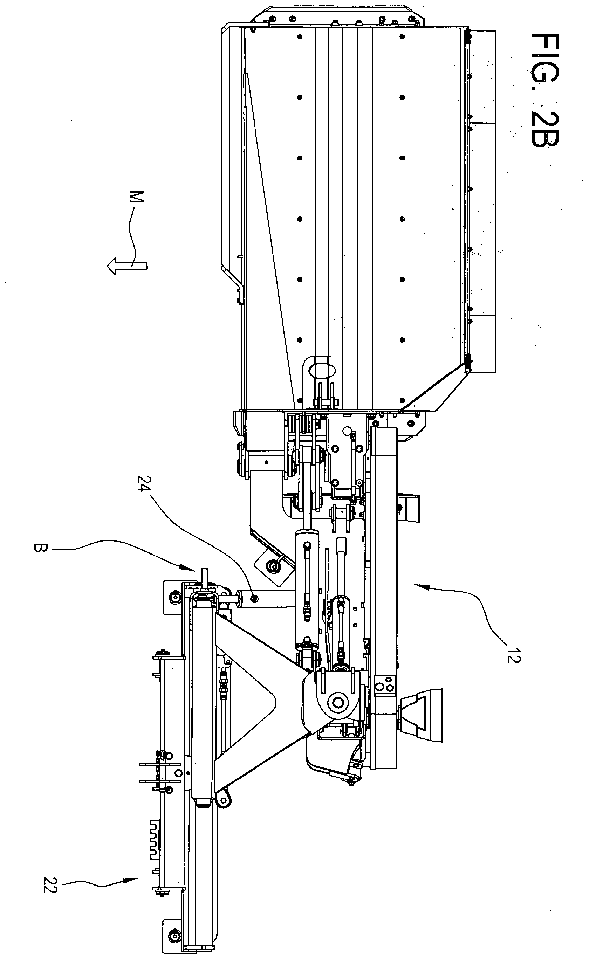

Advantageously, the equipment comprises means 24 for retaining the shredding means 12 in the transversal operating position, which can be connected in an engageable and disengageable manner between the shredding means and the coupling means in a respective first connecting position A (illustrated in Figures 1A to 1F), wherein the shredding means 12 extend transversally from a respective side of the coupling means 22, and the equipment 10 is designed to be arranged in front of the transporting vehicle, and in a respective second connecting position B (illustrated in Figures 2A and 2B), wherein the shredding means 12 extend transversally on the opposite side of the coupling means 22, and the equipment 10 is designed to be arranged at the rear of the transport vehicle.

In this way, it is possible to easily and quickly change of arrangement of the equipment directly in the operating area, without the need to transport the equipment to a special workshop.

Advantageously, in particular for modifying the configuration of the equipment 10, the shredding means are designed to rotate, horizontally by an even angle, substantially equal to 180°, in particular relative to the rotation pin 23.

Advantageously, the retaining means which are connectable in engageable and disengageable manner comprise, or consist of, means 24 which are designed to dampen the stresses and/or the impacts which the shredding means receive whilst advancing in the operating or shredding condition.

Advantageously, the retaining means are defined or consist of a respective single connecting element 24 and more specifically, as illustrated, the retaining means are in the form of a damping or anti-shock cylinder 24, in particular of the hydraulic type, which has a cylinder for the operating fluid, and which preferably is connected or fixed to the shredding means 12, and from which extends a respective rod, in particular connecting or fixing to the frame 22 for coupling to the vehicle.

More specifically, as may be inferred from the corresponding drawings, the shredding means 121 comprise a respective frame 12 rotatable in a horizontal, or substantially horizontal, plane relative to the pin 23, in particular vertical or substantially vertical, for articulation to the frame 22 for coupling to the vehicle.

The frame 121 supports a body 122 supporting the shredding equipment, in turn comprising the rotor 14 carrying the knives or flails and the protective containment body 16.

More specifically, as may be inferred from corresponding drawings, the body 122 for supporting the shredding equipment is on the longitudinal extension of the frame 121 for connection to the frame 22 for coupling to the vehicle.

The supporting body 122 is preferably articulated, in particular in a rotatable fashion, with respect to the supporting frame 121, thanks to a respective pin, or pin means, the respective pin 123 being longitudinal, or substantially longitudinal.

More specifically, as illustrated and as may be clearly inferred from Figures 1A to 1F, the body 122 for supporting the shredding equipment is thus movable, relative to the frame 121 for connecting to the frame 22 for coupling to the vehicle, relative to an axis 123, which extends according to the direction of movement M to rotate between a raised rest position and a plurality of angular working positions, in particular also inclined downwards to follow a respective surface of a slope to be treated. More specifically, as illustrated, for this purpose there are respective jack means 120, 120' which rotate the shredding means 12 relative to the pin means 123 in the various raised and/or working positions.

Advantageously, on the frame 22 for coupling to the vehicle, there are first 241 and second 242 means for fixing the retaining means 24, in particular respectively for the retaining means in the first connecting position A and in the second connecting position B.

Advantageously, the first 241 and the second 242 means for fixing the retaining means 24 on the frame 22 for coupling to the vehicle are substantially identical to each other. In this way, it is possible to fix the retaining means in a fast and easy manner to the two respective fastening points on the connecting frame 22.

Advantageously, on the shredding means, in particular on the frame 121 for supporting the shredding equipment, there are first 241' and second 242' means for fixing the retaining means 24, in particular respectively for the retaining means in the first connecting position A and in the second connecting position B.

Advantageously, the first 241' and second 242' means for fixing the retaining means 24 on the shredding means, in particular on the frame 121 for supporting the shredding equipment, are identical to, or substantially identical, to each other.

In this way, it is possible to fix the retaining means in a fast and easy manner to the two respective fastening points on the shredding means 12. Advantageously, in the first connecting position A, the retaining means 24 are connected to the articulation frame 121 on the side of this, relative to the articulation pin 23, which is opposite the side for positioning the shredding equipment 14, 16.

Advantageously, in the second connecting position B, the retaining means 24 are connected to the articulation frame 121 on the same side of this, relative to the articulation pin 23, for positioning the shredding equipment 14, 16.

Advantageously, in the first connecting position A, the point, or respective means 241', for fixing the retaining means 24 to the shredding means, in particular to the frame 121 for articulation to the frame 22 for coupling to the vehicle is located at a free end of the frame 121.

Advantageously, in the second connecting position B, the point, or respective means 242', for fixing the retaining means 24 to the frame 121 for articulation to the frame 22 for coupling to the vehicle is located at an intermediate end of the frame 121, in particular between the zone of articulation to the connecting frame 22 and the zone of articulation to the body 122 which carries the shredding equipment.

More specifically, as illustrated, the retaining means 24 are connected to the frame 22 for coupling to the vehicle extending from the side 22a or face of this which is opposite the side 22b which, in use, faces the vehicle. Advantageously, the respective point, or corresponding means 241, 242 for fixing the retaining means 24 to the frame 22 for coupling to the vehicle are located at a respective lateral edge 22c of the connecting frame 22.

More specifically, as illustrated, both the points, or means 241, 242, for fixing the retaining means 24 to the connecting frame 22, in the first A and in the second B connecting position, are located at a respective lateral edge 22c of the connecting frame 22.

Advantageously, the point, or respective means 241, for fixing the retaining means 24 to the frame 22 for coupling to the vehicle in the first connecting position A is positioned above the point, or respective means 242, for fixing the retaining means 24 to the connecting frame 22 in the second connecting position B.

Advantageously, the respective means 241, 242 for fixing the retaining means 24 to the frame 22 for coupling to the vehicle are defined by respective housing means, in particular by a first and a second seat 25, 25 aligned with each other, in particular in a transversal direction.

The seats 25, 25 are designed to receive a corresponding pin 26 for connection of an end 27 of the retaining means, in particular an end of the rod of the corresponding retaining cylinder or jack 24.

More specifically, as illustrated, the housing means, in particular a respective seat 25, which is designed to receive a corresponding pin 26 for connection of an end 27 of the retaining means 24 is provided on the side wall 222 of the connecting frame 22.

More specifically, as illustrated, the housing means, in particular a respective seat 25, which is designed to receive a corresponding pin 26 for connection of an end 27 of the retaining means 24, is provided on a respective bracket, or protruding portion, 28 which extends transversely from the corresponding side wall of the connecting frame 22 and which extends facing towards and spaced from the corresponding side wall 222 of the connecting frame 22.

More specifically, as illustrated, the bracket 28 supports the seats 25, 25 for the connection of the retaining means 24 in both the first A and second B connecting position, that is to say, of both the first and second fixing means 241, 242.

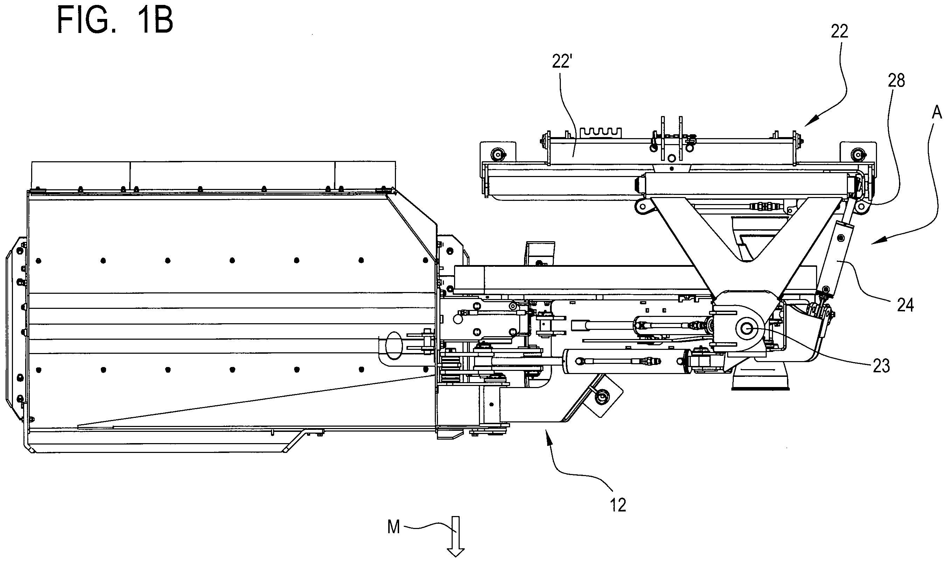

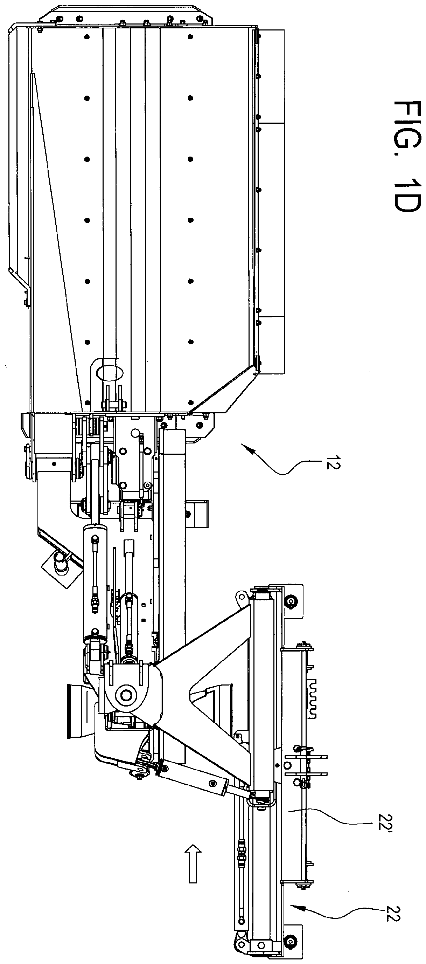

More specifically, the frame for coupling to the vehicle comprises a part 22', which is fixed, or which can be fixed, directly to the vehicle, and a part 22 transversely movable relative to the fixed part 22', in particular for moving conveniently in a transversal direction the shredding means 12, as may be easily inferred from Figures 1B and 1D.

Advantageously, the first 241 and second 242 means 12 for fixing the retaining means which are provided on the connecting frame 22 respectively in the first connecting position A and in the second connecting position B are provided on the mobile part 22 of the connecting frame 12.

Advantageously, the point or means 241' for fixing the retaining means on the frame 121 for supporting the shredding means, in the first connecting position A, is located at a protruding end bracket 121' of the supporting frame 121.

More specifically, as illustrated, basically, in the second connecting position B, the retaining means 24 are connected at a point which is provided between the zone of articulation and the body 122 which supports the shredding means or equipment.

Advantageously, thanks to the equipment, the operator, who needs to position the shredding equipment in a different position relative to the vehicle, for example moving it from a front position to a rear position, for example to perform corresponding operations for shredding plant material particularly positioned, may operate, quickly and easily, directly on the working area.

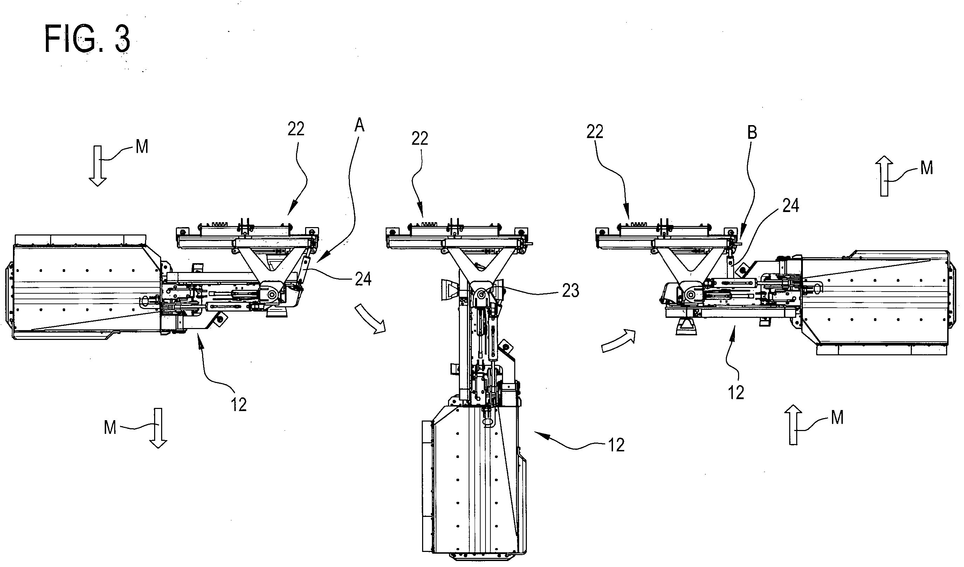

In effect, the operator must simply disengage the retaining means, or damper cylinder, 24 from the fixing means provided in the respective connecting position, for example in the position A; it is therefore necessary to horizontally rotate by 180° the frame 121 which supports the shredding means relative to the pin 23 for articulation to the coupling frame 22 (as may be well inferred from Figure 3), and then engage again the retaining means, or damper cylinder, 24 in the further connecting position, for example in the position B.

At this point, it will be sufficient to turn the vehicle and engage, for example the rear side of this, with the connecting frame 22.

Basically, it is possible to operate in a quick and easy fashion, directly on the working area, without the need to use special mechanical apparatuses such as lifting and positioning winches or the like.

The invention described has evident industrial applications. It would be obvious to one skilled in the art that several changes and modifications can be made to the invention without departing from the scope of the invention, as defined in the claims. It is also easy to imagine further embodiments of the invention comprising one or more of the features described herein. Moreover, it will be understood that all the details of the invention may be substituted for technically equivalent elements.

## Claims

1. Equipment (10) for shredding plant material, in particular grassy material and/or shrubs in general, which is designed to be supported, preferably in a condition suspended above the ground, and moved by a respective vehicle, in particular a tractor, the equipment being, in particular, movable to at least one working position or position for shredding the plant material, preferably wherein it extends transversely to the direction of drive or forward movement (M) of the vehicle, and to a respective rest position, in particular suitable for road transport, the equipment comprising means (12) for shredding the plant material, comprising a respective rotatable rotor (14) to which respective knives, or flails (16) for shredding the plant material are articulated and which is housed in a corresponding protective containment body (18), which is designed to define, in use, with the underlying ground a respective working chamber (20), of the means, or frame, (22) for coupling to the transport vehicle, and rotatable or articulated means for supporting the shredding means relative to the coupling means comprising a respective pin (23) for rotation of the shredding means (12) relative to the means for coupling to the vehicle (22); the equipment further comprises means (24) for retaining the shredding means (12) in the transversal operating position, which are connectable in an engageable and disengageable manner between the shredding means and the coupling means in a respective first connecting position (A), wherein the shredding means (12) extend transversally from a respective side of the coupling means (22), and the equipment (10) is designed to be arranged in front of the transporting vehicle, and in a respective second connecting position (B), wherein the shredding means (12) extend transversally from the opposite side of the coupling means (22), and the equipment (10) is designed to be arranged to the rear of the transport vehicle; the shredding means (12) comprise a respective frame (121) rotatable in a horizontal, or substantially horizontal, plane relative to a corresponding pin (23) vertical, or substantially vertical, for articulation to the frame (22) for coupling to the vehicle and a body (122) for supporting the shredding equipment, comprising the rotor (14) carrying the knives or flails and the protective containment body (16), **characterised in that**, on the shredding means on the frame (121) for supporting the shredding equipment, there are first (241') and second (242') means for fixing the retaining means (24) for the retaining means in the first connecting position (A) and in the second connecting position (B), wherein in the first connecting position (A), the point, or respective means (241'), for fixing the retaining means (24) to the frame (121) for articulation to the frame (22) for coupling to the vehicle is located at a free end of the frame (121); and in the second connecting position (B), the point, or respective means (242'), for fixing the retaining means (24) to the frame (121) for articulation to the frame (22) for coupling to the vehicle is located at an intermediate end of the frame (121) between the zone of articulation to the connecting frame (22) and the zone of articulation to the body (122) which carries the shredding equipment, so that, for modifying the configuration of the equipment (10), the shredding means (12) are designed to rotate horizontally by an even angle, substantially equal to 180°, relative to the rotation pin (23).

2. The equipment according to claim 1, **characterised in that** the retaining means comprise, or consist of, means (24) which are designed to dampen the stresses and the impacts which the shredding means receive whilst advancing in the operating or shredding condition.

3. The equipment according to any one of the preceding claims, **characterised in that** the retaining means are defined in the form of a respective single connecting means (24).

4. The equipment according to any one of the preceding claims, **characterised in that** the retaining means are in the form of a damping or anti-shock cylinder (24).

5. The equipment according to any one of the preceding claims, **characterised in that** the supporting body (122) is articulated, in particular in a rotatable fashion thanks to a respective pin (123) longitudinal, or substantially longitudinal, relative to the supporting frame (121).

6. The equipment according to any one of the preceding claims, **characterised in that**, in the first connecting position (A), the retaining means (24) are connected to the articulation frame (121) on the side of this, relative to the articulation pin (23), which is opposite the side for positioning the shredding equipment (14, 16).

7. The equipment according to any one of the preceding claims, **characterised in that**, in the second connecting position (B), the retaining means (24) are connected to the articulation frame (121) on the same side of this, relative to the articulation pin (23), for positioning the shredding equipment (14, 16).

8. The equipment according to any one of the preceding claims, **characterised in that**, on the frame (22) for coupling to the vehicle, there are first (241) and second (242) means for fixing the retaining means (24), in particular respectively for the retaining means in the first connecting position (A) and in the second connecting position (B).

9. The equipment according to claim 8 **characterised in that** the first (241) and the second (242) means for fixing the retaining means (24) on the frame (22) for coupling to the vehicle and/or the first (241') and second (242') means for fixing the retaining means (24) on the shredding means, in particular on the frame (121) for supporting the shredding equipment, are identical to, or substantially identical, to each other.

10. The equipment according to any one of the preceding claims, **characterised in that** the retaining means (24) are connected to the frame (22) for coupling to the vehicle extending from the side (22a) or face of this which is opposite the side (22b) which, in use, faces the vehicle.

11. The equipment according to claim 8, **characterised in that** the respective point, or means (241, 242), for fixing the retaining means (24) to the frame (22) for coupling to the vehicle is located at a respective lateral edge (22c) of the connecting frame (22), in particular both the points, or means (241, 242), for fixing the retaining means (24) to the connecting frame (22), in the first (A) and in the second (B) connecting position, are at a respective lateral edge (22c) of the connecting frame (22).

12. The equipment according to claim 8, **characterised in that** the point, or respective means (241), for fixing the retaining means (24) to the frame (22) for coupling to the vehicle in the first connecting position (A) is positioned above the point, or respective means (242), for fixing the retaining means (24) to the connecting frame (22) in the second connecting position (B).

13. The equipment according to claim 8, **characterised in that** the respective means (241, 242) for fixing the retaining means (24) to the frame (22) for coupling to the vehicle are defined by respective housing means, in particular by a first and a second seat (25, 25) aligned with each other, in particular in a transversal direction, the seats (25, 25) being designed to receive a corresponding pin (26) for connection of an end (27) of the retaining means, in particular the rod of the corresponding retaining cylinder or jack (24).

14. The equipment according to claim 13, **characterised in that** the respective seat (25) which is designed to receive a corresponding pin (26) for connection of an end (27) of the retaining means is provided on the side wall (222) of the connecting frame (22); and/or **in that** the respective seat (25) which is designed to receive an end (27) of the retaining means (24) is provided on a relative bracket (28) protruding transversely from the corresponding side (222) of the connecting frame (22), and which, in particular, extends facing and spaced from the corresponding side wall of the connecting frame (22).

15. The equipment according to claim 14, **characterised in that** a relative bracket, or protruding portion, (28) is designed to carry the seats (25) for the connection of the retaining means (24) in both the first (A) and second (B) connecting position.

16. The equipment according to claim 8, **characterised in that** the connecting frame comprises a part (22'), which can be fixed directly to the vehicle, and a part (22) which is transversely movable relative to the fixed part (22'), in particular for transversely positioning the shredding means (12); the first (241) and second (242) means (12) for fixing the retaining means which are provided on the connecting frame (22) respectively in the first connecting position (A) and in the second connecting position (B) are provided on the mobile part (22) of the connecting frame (12).

17. The equipment according to any one of the preceding claims, **characterised in that** the point or means (241') for fixing the retaining means on the frame (121) for supporting the shredding means, in the first connecting position (A), is located at a protruding end bracket (121') of the supporting frame (121).

## Patentansprüche

1. Ausrüstung (10) zur Zerkleinerung von Pflanzenmaterial, insbesondere von Grasmaterial und/oder Sträuchern im Allgemeinen, die ausgestaltet ist, um gestützt zu werden, vorzugsweise über dem Boden schwebend, und von einem jeweiligen Fahrzeug bewegt zu werden, insbesondere von einem Traktor, wobei die Ausrüstung insbesondere zu mindestens einer Arbeitsposition oder Position zur Zerkleinerung des Pflanzenmaterials, vorzugsweise in der sie sich quer zur Fahrtrichtung oder Vorwärtsbewegungsrichtung (M) des Fahrzeugs erstreckt, und zu einer jeweiligen Ruheposition bewegbar ist, insbesondere geeignet für den Straßentransport, wobei die Ausrüstung Mittel (12) zur Zerkleinerung des Pflanzenmaterials umfasst, umfassend einen jeweiligen drehbaren Rotor (14), mit dem jeweilige Messer oder Schlägel (16) zur Zerkleinerung des Pflanzenmaterials gelenkig verbunden sind und der in einem entsprechenden schützenden Aufnahmekörper (18) untergebracht ist, der ausgestaltet ist, um in Verwendung mit dem darunter befindlichen Boden eine jeweilige Arbeitskammer (20) zu definieren, für die Mittel oder den Rahmen (22) für die Kupplung am Transportfahrzeug, und drehbare oder Gelenkmittel zum Stützen der Zerkleinerungsmittel relativ zu den Kupplungsmitteln, umfassend einen jeweiligen Zapfen (23) für die Drehung der Zerkleinerungsmittel (12) relativ zu den Mitteln zur Kupplung des Fahrzeugs (22), wobei die Ausrüstung zudem Mittel (24) zum Halten der Zerkleinerungsmittel (12) in der quer angeordneten Betriebsposition umfasst, die auf eingreifbare und lösbare Weise zwischen den Zerkleinerungsmitteln und den Kupplungsmitteln in einer jeweiligen ersten Verbindungsposition (A) verbindbar sind, in der sich die Zerkleinerungsmittel (12) quer von einer jeweiligen Seite der Kupplungsmittel (22) erstrecken und die Ausrüstung (10) ausgestaltet ist, um an der Frontseite des Transportfahrzeugs angeordnet zu werden, und in einer jeweiligen zweiten Verbindungsposition (B), in der sich die Zerkleinerungsmittel (12) quer von der anderen Seite der Kupplungsmittel (22) erstrecken und die Ausrüstung (10) ausgestaltet ist, um an der Heckseite des Transportfahrzeugs angebracht zu werden, wobei die Zerkleinerungsmittel (12) einen jeweiligen Rahmen (121) umfassen, der in einer horizontalen oder im Wesentlichen horizontalen Ebene relativ zum entsprechenden Zapfen (23) vertikal oder im Wesentlichen vertikal drehbar ist für die Gelenkverbindung mit dem Rahmen (22) zur Kupplung am Fahrzeug, und einen Körper (122) zum Stützen der Zerkleinerungsausrüstung, umfassend den Rotor (14), tragend die Messer oder Schlägel und den schützenden Aufnahmekörper (16), **dadurch gekennzeichnet, dass** an den Zerkleinerungsmittel am Rahmen (121) zum Stützen der Zerkleinerungsausrüstung erste (241') und zweite (242') Mittel zum Fixieren der Haltemittel (24) für die Haltemittel in der ersten Verbindungsposition (A) und in der zweiten Verbindungsposition (B) bereitgestellt sind, wobei der Punkt oder das jeweilige Mittel (241') zum Fixieren der Haltemittel (24) am Rahmen (121) zur Gelenkverbindung am Rahmen (22) zur Kupplung am Fahrzeug in der ersten Verbindungsposition an einem freien Ende des Rahmens (121) angeordnet ist und der Punkt oder das jeweilige Mittel (242') zum Fixieren der Haltemittel (24) am Rahmen (121) zur Gelenkverbindung am Rahmen (22) zur Kupplung am Fahrzeug in der zweiten Verbindungsposition (B) an einem Zwischenende des Rahmens (121) zwischen dem Bereich der Gelenkverbindung mit dem Verbindungsrahmen (22) und dem Bereich der Gelenkverbindung mit dem Körper (122), der die Zerkleinerungsausrüstung trägt, befindlich ist, sodass die Zerkleinerungsmittel (12) zur Änderung der Konfiguration der Ausrüstung (10) ausgestaltet sind, um sich horizontal um einen geraden Winkel, im Wesentlichen gleich 180°, relativ zum Rotationszapfen (23) zu drehen.

2. Ausrüstung nach Anspruch 1, **dadurch gekennzeichnet, dass** die Haltemittel Mittel (24) umfassen oder aus diesen bestehen, die ausgestaltet sind, um die Belastungen und Beanspruchungen zu dämpfen, die auf die Zerkleinerungsmittel während des Vorschubs im Betriebs- oder Zerkleinerungszustand einwirken.

3. Ausrüstung nach einem der vorhergehenden Ansprüche, **dadurch gekennzeichnet, dass** die Haltemittel in der Form eines jeweiligen einzelnen Verbindungsmittels (24) definiert sind.

4. Ausrüstung nach einem der vorhergehenden Ansprüche, **dadurch gekennzeichnet, dass** die Haltemittel in der Form eines Dämpfungs- oder Stoßdämpferzylinders (24) ausgebildet sind.

5. Ausrüstung nach einem der vorhergehenden Ansprüche, **dadurch gekennzeichnet, dass** der Stützkörper (122) gelenkig ausgebildet ist, insbesondere auf eine drehbare Art und Weise dank eines Zapfens (123) längsseitig oder im Wesentlichen längsseitig relativ zum Stützrahmen (121).

6. Ausrüstung nach einem der vorhergehenden Ansprüche, **dadurch gekennzeichnet, dass** die Haltemittel (24) in der ersten Verbindungsposition (A) mit dem Gelenkrahmen (121) an dessen Seite relativ zum Gelenkzapfen (23) verbunden sind, der gegenständig zur Seite angeordnet ist, um die Zerkleinerungsausrüstung (14, 16) zu positionieren.

7. Ausrüstung nach einem der vorhergehenden Ansprüche, **dadurch gekennzeichnet, dass** die Haltemittel (24) in der zweiten Verbindungsposition (B) mit dem Gelenkrahmen (121) an dessen selber Seite relativ zum Gelenkzapfen (23) verbunden sind, um die Zerkleinerungsausrüstung (14, 16) zu positionieren.

8. Ausrüstung nach einem der vorhergehenden Ansprüche, **dadurch gekennzeichnet, dass** am Rahmen (22) zur Kupplung mit dem Fahrzeug erste (241) und zweite (242) Mittel bereitgestellt sind, um die Haltemittel (24) zu fixieren, insbesondere jeweils für die Haltemittel in der ersten Verbindungsposition (A) und in der zweiten Verbindungsposition (B).

9. Ausrüstung nach Anspruch 8, **dadurch gekennzeichnet, dass** die ersten (241) und die zweiten (242) Mittel zum Fixieren der Haltemittel (24) am Rahmen (22) zur Kupplung am Fahrzeug und/oder die ersten (241') und die zweiten (242') Mittel zum Fixieren der Haltemittel (24) an den Zerkleinerungsmitteln, insbesondere am Rahmen (121) zum Stützen der Zerkleinerungsausrüstung, identisch oder im Wesentlichen identisch zueinander sind.

10. Ausrüstung nach einem der vorhergehenden Ansprüche, **dadurch gekennzeichnet, dass** die Haltemittel (24) mit dem Rahmen (22) zur Kupplung am Fahrzeug verbunden sind, sich erstreckend von dessen Seite (22a) oder Seitenfläche, die gegenständig zur Seite (22b) angeordnet ist, die in Verwendung dem Fahrzeug zugewandt ist.

11. Ausrüstung nach Anspruch 8, **dadurch gekennzeichnet, dass** der jeweilige Punkt oder das Mittel (241, 242) zum Fixieren der Haltemittel (24) am Rahmen (22) zur Kupplung am Fahrzeug an einer jeweiligen Seitenkante (22c) des Verbindungsrahmens (22) angeordnet ist, wobei insbesondere sowohl die Punkte als auch die Mittel (241, 242) zum Fixieren der Haltemittel (24) am Verbindungsrahmen (22) in der ersten (A) und in der zweiten (B) Verbindungsposition an einer jeweiligen Seitenkante (22c) des Verbindungsrahmens (22) angeordnet sind.

12. Ausrüstung nach Anspruch 8, **dadurch gekennzeichnet, dass** der Punkt oder das jeweilige Mittel (241) zum Fixieren der Haltemittel (24) am Rahmen (22) zur Kupplung am Fahrzeug in der ersten Verbindungsposition (A) über dem Punkt oder dem jeweiligen Mittel (242) zum Fixieren der Haltemittel (24) am Verbindungsrahmen (22) in der zweiten Verbindungsposition (B) angeordnet ist.

13. Ausrüstung nach Anspruch 8, **dadurch gekennzeichnet, dass** die jeweiligen Mittel (241, 242) zum Fixieren der Haltemittel (24) am Rahmen (22) zur Kupplung am Fahrzeug durch jeweilige Aufnahmemittel definiert sind, insbesondere durch einen ersten und einen zweiten Sitz (25, 25), die zueinander ausgerichtet sind, insbesondere in eine Querrichtung, wobei die Sitze (25, 25) ausgestaltet sind, um einen entsprechenden Zapfen (26) zur Verbindung eines Endes (27) der Haltemittel aufzunehmen, insbesondere die Stange des entsprechenden Haltezylinders oder Hebers (24).

14. Ausrüstung nach Anspruch 13, **dadurch gekennzeichnet, dass** der jeweilige Sitz (25), der ausgestaltet ist, um einen entsprechenden Zapfen (26) zur Verbindung eines Endes (27) der Haltemittel aufzunehmen, an der Seitenwand (222) des Verbindungsrahmens (22) bereitgestellt ist, und/oder dadurch, dass der jeweilige Sitz (25), der ausgestaltet ist, um ein Ende (27) der Haltemittel (24) aufzunehmen, an einem jeweiligen Bügel (28) bereitgestellt ist, der quer aus der entsprechenden Seite (222) des Verbindungsrahmens (22) hervorsteht und der sich insbesondere der entsprechenden Seitenwand des Verbindungsrahmens (22) zugewandt und von dieser beabstandet erstreckt.

15. Ausrüstung nach Anspruch 14, **dadurch gekennzeichnet, dass** ein jeweiliger Bügel oder hervorspringender Abschnitt (28) ausgestaltet ist, um die Sitze (25) für die Verbindung der Haltemittel (24) sowohl in der ersten (A) als auch der zweiten (B) Verbindungsposition zu tragen.

16. Ausrüstung nach Anspruch 8, **dadurch gekennzeichnet, dass** der Verbindungsrahmen einen Teil (22') umfasst, der direkt am Fahrzeug fixiert werden kann, und einen Teil (22), der quer relativ zum fixierten Teil (22') bewegbar ist, insbesondere, um die Zerkleinerungsmittel (12) quer zu positionieren, wobei die ersten (241) und die zweiten (242) Mittel (12) zum Fixieren der Haltemittel, die am Verbindungsrahmen (22) jeweils in der ersten Verbindungsposition (A) und in der zweiten Verbindungsposition (B) bereitgestellt sind, am mobilen Teil (22) des Verbindungsrahmens (12) bereitgestellt sind.

17. Ausrüstung nach einem der vorhergehenden Ansprüche, **dadurch gekennzeichnet, dass** der Punkt oder das Mittel (241') zum Fixieren der Haltemittel am Rahmen (121) zum Stützen der Zerkleinerungsmittel in der ersten Verbindungsposition (A) an einem hervorstehenden Endbügel (121') des Stützrahmens (121) angeordnet ist.

## Revendications

1. Équipement (10) pour broyer une matière végétale, notamment le matériel herbeux et/ou des arbustes en général, conçu pour être soutenu, de préférence dans une condition suspendue au-dessus du sol, et déplacé par un véhicule respectif, en particulier un tracteur, l'équipement pouvant, notamment, se déplacer vers au moins une position de travail ou position pour broyer la matière végétale, de préférence où il se développe transversalement dans la direction d'entraînement ou d'avancement (M) du véhicule, et vers une position de repos, notamment appropriée au transport sur route, l'équipement comprenant des moyens (12) de broyage de la matière végétale, comprenant un rotor pivotant respectif (14) auquel sont articulés des couteaux respectif, ou des fléaux (16) pour broyer la matière végétale et se logeant dans un récipient protecteur correspondant (18), qui est conçu pour former, en fonctionnement, avec le sol sous-jacent, une chambre de travail respective (20), des moyens, ou du châssis, (22) d'accouplement au véhicule de transport, et des moyens pivotants ou articulés pour soutenir les moyens de broyage par rapport aux moyens d'accouplement, comprenant un pivot respectif (23) pour la rotation des moyens de broyage (12) par rapport aux moyens d'accouplement au véhicule (22) ; l'équipement comprend aussi des moyens (24) de retenue des moyens de broyage (12) dans la position transversale de travail, qui sont raccordables de manière engageable et désengageable entre les moyens de broyage et les moyens d'accouplement dans une première position respective de raccordement (A), dans laquelle les moyens de broyage (12) se développent transversalement depuis un côté respectif des moyens d'accouplement (22), et l'équipement (10) est conçu pour se placer devant le véhicule de transport, et dans une seconde position respective de raccordement (B), dans laquelle les moyens de broyage (12) se développent transversalement depuis le côté opposé des moyens d'accouplement (22), et l'équipement (10) est conçu pour se placer derrière le véhicule de transport ; les moyens de broyage (12) comprennent un châssis respectif (121) pivotant dans un plan horizontal, ou essentiellement horizontal, par rapport à un pivot correspondant (23) vertical, ou essentiellement vertical, pour l'articulation au châssis (22) d'accouplement au véhicule et un corps (122) de support de l'équipement de broyage, comprenant le rotor (14) portant les couteaux ou fléaux et le récipient protecteur (16), **caractérisé en ce que** les moyens de broyage, sur le châssis (121) de support de l'équipement de broyage, comportent des premiers (241') et des seconds (242') moyens de fixation des moyens de retenue (24) pour les moyens de retenue dans la première position de raccordement (A) et dans la seconde position de raccordement (B), **caractérisé en ce que**, dans la première position de raccordement (A), le point, ou les moyens respectifs (241') de fixation des moyens de retenue (24) au châssis (121) d'articulation au châssis (22) d'accouplement au véhicule se situe/nt à une extrémité libre du châssis (121) ; et dans la seconde position de raccordement (B), le point, ou les moyens respectifs (242') de fixation des moyens de retenue (24) au châssis (121) d'articulation au châssis (22) d'accouplement au véhicule se situe/nt à une extrémité intermédiaire du châssis (121) entre la zone d'articulation au châssis de raccordement (22) et la zone d'articulation au corps (122) portant l'équipement de broyage, de sorte que, pour modifier la configuration de l'équipement (10), les moyens de broyage (12) sont conçus pour pivoter horizontalement selon un angle égal, essentiellement de 180°, par rapport au pivot de rotation (23).

2. Équipement selon la revendication 1, **caractérisé en ce que** les moyens de retenue comprennent, ou consistent en, des moyens (24) conçus pour amortir les contraintes et les chocs que les moyens de broyage reçoivent pendant qu'ils avancent dans la condition de fonctionnement ou de broyage.

3. Équipement selon l'une quelconque des revendications précédentes, **caractérisé en ce que** les moyens de retenue se présentent sous la forme d'un unique organe de raccordement respectif (24).

4. Équipement selon l'une quelconque des revendications précédentes, **caractérisé en ce que** les moyens de retenue se présentent sous la forme d'un cylindre amortisseur ou antichoc (24).

5. Équipement selon l'une quelconque des revendications précédentes, **caractérisé en ce que** le corps de support (122) est articulé, notamment dans une manière pivotante par l'intermédiaire d'un pivot respectif (123) longitudinal, ou essentiellement longitudinal, par rapport au châssis de support (121).

6. Équipement selon l'une quelconque des revendications précédentes, **caractérisé en ce que**, dans la première position de raccordement (A), les moyens de retenue (24) sont raccordés au châssis d'articulation (121) sur le côté de celui-ci, par rapport au pivot d'articulation (23), qui est opposé au côté de positionnement de l'équipement de broyage (14, 16).

7. Équipement selon l'une quelconque des revendications précédentes, **caractérisé en ce que**, dans la seconde position de raccordement (B), les moyens de retenue (24) sont raccordés au châssis d'articulation (121) sur le même côté de celui-ci, par rapport au pivot d'articulation (23), de positionnement de l'équipement de broyage (14, 16).

8. Équipement selon l'une quelconque des revendications précédentes, **caractérisé en ce que** le châssis (22) d'accouplement au véhicule comporte des premiers (241) et des seconds (242) moyens de fixation des moyens de retenue (24), notamment respectivement pour les moyens de retenue dans la première position de raccordement (A) et dans la seconde position de raccordement (B).

9. Équipement selon la revendication 8, **caractérisé en ce que** les premiers (241) et les seconds (242) moyens de fixation des moyens de retenue (24) sur le châssis (22) d'accouplement au véhicule et/ou les premiers (241') et les seconds (242') moyens de fixation des moyens de retenue (24) sur les moyens de broyage, notamment sur le châssis (121) de support de l'équipement de broyage, sont identiques, ou essentiellement identiques, l'un l'autre.

10. Équipement selon l'une quelconque des revendications précédentes, **caractérisé en ce que** les moyens de retenue (24) sont raccordés au châssis (22) d'accouplement au véhicule, en se développant depuis le côté (22a) ou la face de celui-ci, qui est opposé/e au côté (22b) qui, en fonctionnement, regarde le véhicule.

11. Équipement selon la revendication 8, **caractérisé en ce que** le point respectif, ou moyens (241, 242), de fixation des moyens de retenue (24) au châssis (22) d'accouplement au véhicule, se situe/nt au niveau d'un bord latéral respectif (22c) du châssis de raccordement (22), en particulier les deux points, ou moyens (241, 242), de fixation des moyens de retenue (24) au châssis de raccordement (22), dans la première (A) et dans la seconde (B) position de raccordement, se situent au niveau d'un bord latéral respectif (22c) du châssis de raccordement (22).

12. Équipement selon la revendication 8, **caractérisé en ce que** le point, ou les moyens respectifs (241), de fixation des moyens de retenue (24) au châssis (22) d'accouplement au véhicule dans la première position de raccordement (A), se situe/nt au-dessus du point, ou des moyens respectifs (242), de fixation des moyens de retenue (24) au châssis de raccordement (22) dans la seconde position de raccordement (B).

13. Équipement selon la revendication 8, **caractérisé en ce que** les moyens respectifs (241, 242) de fixation des moyens de retenue (24) au châssis (22) d'accouplement au véhicule se définissent par des moyens respectifs de logement, en particulier par un premier logement et par un second logement (25, 25) alignés entre eux, notamment dans une direction transversale, les logements (25, 25) étant conçus pour recevoir un pivot correspondant (26) de raccordement à une extrémité (27) des moyens de retenue, en particulier la tige du cylindre ou vérin de retenue correspondant (24).

14. Équipement selon la revendication 13, **caractérisé en ce que** le logement respectif (25) conçu pour recevoir un pivot correspondant (26) de raccordement d'une extrémité (27) des moyens de retenue, se trouve sur la paroi latérale (222) du châssis de raccordement (22) ; et/ou **en ce que** le logement respectif (25) conçu pour recevoir une extrémité (27) des moyens de retenue (24), se trouve sur un étrier correspondant (28) dépassant transversalement du côté correspondant (222) du châssis de raccordement (22), et qui, en particulier, se développe en face et à distance de la paroi latérale correspondante du châssis de raccordement (22).

15. Équipement selon la revendication 14, **caractérisé en ce qu'**un étrier correspondant, ou partie saillante, (28) est conçu/e pour porter les logements (25) de raccordement des moyens de retenue (24) dans les deux positions de raccordement, première (A) et seconde (B).

16. Équipement selon la revendication 8, **caractérisé en ce que** le châssis de raccordement comprend une partie (22') qui peut être fixée directement au véhicule, et une partie (22) qui est déplaçable transversalement par rapport à la partie fixe (22'), en particulier pour le positionnement transversal des moyens de broyage (12) ; les premiers (241) et les seconds (242) moyens (12) de fixation des moyens de retenue situés sur le châssis de raccordement (22) respectivement dans la première position de raccordement (A) et dans la seconde position de raccordement (B), se trouvent sur la partie mobile (22) du châssis de raccordement (12).

17. Équipement selon l'une quelconque des revendications précédentes, **caractérisé en ce que** le point ou les moyens (241') de fixation des moyens de retenue sur le châssis (121) de support des moyens de broyage, dans la première position de raccordement (A), se situe/nt au niveau d'un étrier terminal saillant (121') du châssis de support (121).
